# FASCICULE DE BREVET EUROPEEN

(11) **EP 2 668 647 B1**
(45) Date de publication et mention de la délivrance du brevet: **24.06.2015**
(21) Numéro de dépôt: 12705362.7
(22) Date de dépôt: 24.01.2012
(51) Int. Cl.: B62H 5/20, G09F 7/12, G09F 7/16, G09F 21/04, G09F 3/18, G09F 3/20

(54) **PROCEDE DE MARQUAGE D'UN OBJET**
VERFAHREN ZUR KENNZEICHNUNG EINES GEGENSTANDES
METHOD OF MARKING AN OBJECT

(30) Priorité: 24.01.2011 FR 1150535
(43) Date de publication de la demande: 04.12.2013
(73) Titulaire: Francois, Alexandre, 78306 Poissy (FR)
(72) Inventeur: Francois, Alexandre, 78306 Poissy (FR)
(74) Mandataire: Henrich, Christel
(86) Numéro de dépôt international: PCT/FR2012/050145
(87) Numéro de publication internationale: WO 2012/101369

(56) Documents cités:
- GB-A- 2 402 120
- US-A- 4 319 524
- US-A1- 2002 089 173

## Description

La présente invention concerne le marquage d'un objet de manière pérenne, permettant sa sécurisation et son identification notamment en cas de perte ou de vol.

La présente invention est particulièrement adaptée au marquage de véhicules à deux roues tels que des vélos, motos ou scooters.

Il existe actuellement de nombreux systèmes de marquage d'objets, allant de la simple étiquette collée sur l'objet, au gravage physique, par sablage notamment. Ces systèmes de marquage ont comme inconvénient de pouvoir être facilement retirés. Ainsi, les étiquettes sont facilement décollées ou dégradées notamment par grattage. De la même manière, le gravage peut être retiré au moyen d'un simple abrasif et est, de plus, compliqué à réaliser.

La recrudescence des vols, notamment de deux roues, rend de plus en plus indispensable le marquage pérenne de certains objets de valeur.

Le document GB 2 402 120 A, qui est considéré comme l'état de la technique le plus proche de l'objet de la revendication 1 et 6, divulgue un procédé pour marquer un objet, comprenant au moins la succession d'étapes suivantes :
- on fournit une pièce de marquage comprenant au moins une paroi translucide, et configurée de sorte qu'une fois appliquée sur une surface de support de l'objet à marquer, elle délimite une chambre entre un substrat secondaire et ladite paroi translucide,
- on applique la pièce de marquage sur la surface de support de manière à emprisonner un élément d'identification de l'objet dans la chambre, et
- on introduit dans la chambre, une couche d'une colle translucide suffisant pour que l'élément d'identification soit couvert par ladite couche de colle, et un dispositif correspondant.

Les documents US 4 319 524 A et US 2002/089173 A1 divulguent l'art antérieur comme indiqué dans la description de l'application examinée: US 4 319 524 A divulgue un système de marquage d'objets au gravage physique, par sablage notamment. US 2002/089173 A1 divulgue une simple étiquette collée permanente sur l'objet.

Un premier objectif de la présente invention est donc de fournir un procédé de marquage d'un objet, pouvant être facilement mis en oeuvre et présentant une résistance accrue aux dégradations volontaires.

Cet objectif est atteint grâce à un procédé pour marquer un objet de manière pérenne, comprenant au moins la succession d'étapes suivantes : on fournit une pièce de marquage comprenant au moins une paroi translucide, et configurée de sorte qu'une fois appliquée sur une surface de support de l'objet à marquer, elle délimite une chambre entre ladite surface de support et ladite paroi translucide ; on applique la pièce de marquage sur la surface de support, de manière à emprisonner un élément d'identification de l'objet dans la chambre ; et on introduit dans la chambre, par un trou de la pièce de marquage qui communique avec ladite chambre, un volume d'une colle translucide suffisant pour que l'élément d'identification soit noyé dans ledit volume de colle.

Le procédé selon l'invention peut être mis en oeuvre industriellement ou manuellement, pour le marquage d'objets de tous types et de formes diverses.

Dans la présente description, on définit comme étant translucide tout élément au travers duquel les objets apparaissent de manière nette ou suffisamment nette. Au sens de la présente demande, le terme translucide englobe donc, de manière générale, tout élément non opaque, et, plus particulièrement, un élément transparent.

L'élément d'identification selon l'invention peut être une étiquette, une bille, un transpondeur, une étiquette RFID ou tout autre support formant ou supportant un (ou plusieurs) signe(s), symbole(s), couleur(s), numéro(s) d'identification, codes, etc., unique(s), permettant d'identifier l'objet. De manière générale, ces informations peuvent être assorties d'un numéro de hotline ou d'une adresse internet permettant l'accès à une base de données centrale dans laquelle les informations sont enregistrées et permettent, par exemple, d'identifier le propriétaire de l'objet.

L'élément d'identification peut comprendre une ou plusieurs parties distinctes.

Il peut être réalisé dans tout matériau apte à conserver son intégrité une fois noyé dans la colle, notamment du métal, du PVC, etc.

Dans la présente description, on dira que l'élément d'identification est noyé dans la colle lorsque la colle est en contact à la fois avec l'élément d'identification et avec la surface de support de l'objet à marquer. De préférence, l'élément d'identification est totalement enrobé de colle. De manière encore plus préférentielle, la chambre est entièrement remplie avec de la colle.

Grâce à la colle, l'élément d'identification et la pièce de marquage se retrouvent scellés à la surface de support de l'objet à marquer.

Comme l'élément d'identification est placé en regard de la paroi translucide de la pièce de marquage et comme la colle utilisée est elle-aussi translucide, il est toujours possible, même après introduction et durcissement de la colle, de distinguer l'élément d'identification et notamment tout signe, symbole, couleur, numéro d'identification, etc. qu'il comporte pour identifier l'objet.

Une fois la colle durcie, il est par ailleurs impossible de retirer l'élément d'identification, noyé dans la colle, sans dégrader l'objet marqué.

Toute tentative de retrait de l'élément d'identification étant aisément détectée, le marquage constitue un moyen de dissuasion efficace à l'encontre des voleurs.

Selon un exemple, au moins une partie de paroi de la chambre est formée par la surface de support de l'objet à marquer. De manière préférentielle, les parois de la chambre sont formées exclusivement par la pièce de marquage, d'une part, et la surface de support de l'objet à marquer, d'autre part.

Selon un autre exemple, la pièce de marquage est appliquée sur la surface de support de manière à emprisonner l'élément d'identification dans la chambre en conservant un premier et un second espacement entre l'élément d'identification et la surface de support et entre l'élément d'identification et la paroi translucide. Lorsque la colle est introduite dans la chambre, elle se propage ainsi dans le premier et le second espacement qui, avantageusement, communiquent l'un avec l'autre, et enrobe totalement ou partiellement l'élément d'identification. Selon un autre exemple, dans une étape préalable à la mise en place de la pièce de marquage, on ponce la surface de support de l'objet à marquer.

Selon un autre exemple, dans une étape préalable à la mise en place de la pièce de marquage, on nettoie et on dégraisse la surface de support de l'objet à marquer.

Selon un autre exemple, préalablement à l'application de la pièce de marquage sur la surface de support, on fait coopérer l'élément d'identification avec des surfaces de support et d'entretoisement prévues sur la pièce de marquage de manière à le rendre solidaire de ladite pièce de marquage.

Selon un autre exemple, on fixe l'élément d'identification sur la surface de support à l'aide de moyens adhésifs préalablement à l'application de la pièce de marquage sur la surface de support.

Selon un autre exemple, la colle est injectée à l'intérieur de la chambre au moyen d'une seringue.

Selon un autre exemple, une fois que la pièce de marquage est scellée à la surface de support de l'objet, on le recouvre avec une étiquette d'avertissement, de préférence autocollante.

Selon un autre exemple, l'objet à marquer est une bicyclette et la surface de support correspond à la surface externe d'un tronçon de tube du cadre de la bicyclette.

Un deuxième objectif de la présente invention est de fournir un dispositif apte à être utilisé pour marquer un objet de manière pérenne, et notamment pour la mise en oeuvre du procédé de marquage défini ci-dessus.

Selon l'invention, un tel dispositif comprend une pièce de marquage comprenant une paroi translucide et apte à être appliquée sur une surface de support d'un objet à marquer en délimitant une chambre entre ladite surface de support et ladite paroi translucide, et un élément d'identification, apte à être emprisonné dans ladite chambre, et la pièce de marquage présente au moins un premier trou, qui est apte à communiquer avec la chambre pour permettre l'introduction de colle dans cette chambre.

Selon un exemple de réalisation, la pièce de marquage est configurée de sorte qu'au moins une partie de paroi de la chambre délimitée entre la surface de support et la paroi translucide, est formée par la surface de support de l'objet à marquer. De manière préférentielle, les parois de la chambre sont formées exclusivement par la pièce de marquage, d'une part, et la surface de support de l'objet à marquer, d'autre part.

Selon un autre exemple, l'élément d'identification est apte à être emprisonné dans la chambre avec un premier et un deuxième espacement entre l'élément d'identification et la surface de support et entre l'élément d'identification et la paroi translucide.

Selon un autre exemple, la pièce de marquage comprend en outre des surfaces de support et d'entretoisement destinées à maintenir l'élément d'identification en regard et à distance de la paroi translucide.

Selon un autre exemple, la pièce de marquage présente en outre au moins un second trou situé à une extrémité de la pièce de marquage qui est opposée à celle où se situe ledit premier trou. Ce second trou peut constituer un orifice d'évacuation de l'air contenu dans la chambre lorsque la colle y est injectée par le premier trou de la pièce de marquage.

Selon encore un autre exemple, la pièce de marquage comprend des moyens adhésifs destinés à adhérer à une surface de support de l'objet à marquer. Ces moyens adhésifs assurent l'étanchéité entre la pièce de marquage et la surface de support de l'objet à marquer et évitent que la colle ressorte de la chambre et vienne souiller la surface de l'objet à marquer.

Avantageusement, ces moyens adhésifs définissent un contour fermé.

Selon un exemple de réalisation, la pièce de marquage comporte au moins un guide adapté pour être positionné à l'intérieur de la chambre une fois la pièce de marquage appliquée sur la surface de support, et pour guider le cheminement de la colle à l'intérieur de ladite chambre. De manière avantageuse, la chambre communique avec le premier et/ou le second trou par l'intermédiaire d'une chicane ou d'une partie de chicane formée par un ou plusieurs de ces guides.

Selon un exemple de réalisation, la pièce de marquage comprend au moins un tube amovible ou cassable situé dans le prolongement du premier trou, et destiné à faciliter l'introduction de la colle à l'intérieur de la chambre. Le second trou, qui forme l'orifice d'évacuation d'air comme indiqué ci-dessus, peut lui aussi être prolongé par un tube amovible ou cassable.

Selon un exemple de réalisation, la pièce de marquage comprend au moins une partie supérieure et une partie inférieure, adaptées pour être superposées, et agencées de sorte que l'élément d'identification peut être pris en étau entre lesdites parties, ce par quoi il est maintenu en regard et à distance de la paroi translucide.

Selon un exemple de réalisation, la pièce de marquage est réalisée entièrement avec des matériaux souples et déformables, ce par quoi elle peut s'adapter à la forme de l'objet à marquer.

Par exemple, la paroi translucide est réalisée en résine. La pièce de marquage peut ainsi être suffisamment souple pour s'adapter à toutes sortes d'objets de dimensions et formes différentes, et permettre un marquage universel.

Selon un exemple de réalisation, la pièce de marquage présente une forme concave vers l'objet à marquer. Cette configuration est notamment adaptée au marquage d'un objet de forme tubulaire tel qu'un tube d'un cadre de bicyclette.

Un troisième objectif de l'invention est de fournir un kit pouvant être utilisé pour marquer un objet de manière pérenne, et notamment pour la mise en oeuvre du procédé défini précédemment.

Un kit selon l'invention comprend un dispositif de marquage tel que défini ci-dessus et un dispositif d'injection de colle dont l'embout est apte à coopérer avec un trou d'injection de la pièce de marquage. L'injection de colle est particulièrement facilitée lorsque le dispositif d'injection de colle est une seringue.

Plusieurs modes ou exemples de réalisation sont décrits dans le présent exposé. Toutefois, sauf précision contraire, les caractéristiques décrites en liaison avec un mode ou un exemple de réalisation quelconque peuvent être appliquées à un autre mode ou exemple de réalisation.

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :
- la figure 1 représente un objet à marquer, et un dispositif de marquage selon un premier mode de réalisation de la présente invention, avant son application sur l'objet ;
- la figure 2 illustre l'injection de colle à l'intérieur de la chambre définie entre la pièce de marquage et l'objet de la figure 1, selon un mode de mise en oeuvre du procédé selon l'invention ;
- la figure 3 est une vue en perspective de l'objet de la figure 1 une fois le marquage terminé ;
- la figure 4 est une vue en coupe transversale selon IV-IV de la figure 3;
- la figure 5 est une vue en coupe longitudinale selon V-V de la figure 4;
- la figure 6 illustre une variante du dispositif de marquage selon le premier mode de réalisation de l'invention, adaptée au marquage d'un objet présentant une surface de support plane ;
- la figure 7 est une vue partielle, en coupe longitudinale, d'un dispositif de marquage selon un deuxième mode de réalisation de l'invention ;
- la figure 8 est une vue éclatée d'une partie d'un dispositif de marquage selon un troisième mode de réalisation, préféré, de la présente invention, montrant notamment deux parties formant un cadre d'une pièce de marquage et un élément d'identification destiné à être maintenu entre lesdites parties;
- la figure 9 illustre une paroi de recouvrement, destinée à recouvrir le cadre de la figure 8;
- la figure 10 illustre deux tubes de la pièce de marquage ;
- la figure 11 est une vue en coupe selon XI-XI de la figure 10 ;
- la figure 12 illustre le dispositif de marquage des figures 8 à 11 une fois positionné sur l'objet à marquer ;
- la figure 13 est une vue en coupe selon XIII-XIII de la figure 12, illustrant le remplissage, avec de la colle, de la chambre délimitée entre la surface de support de l'objet à marquer et la pièce de marquage.

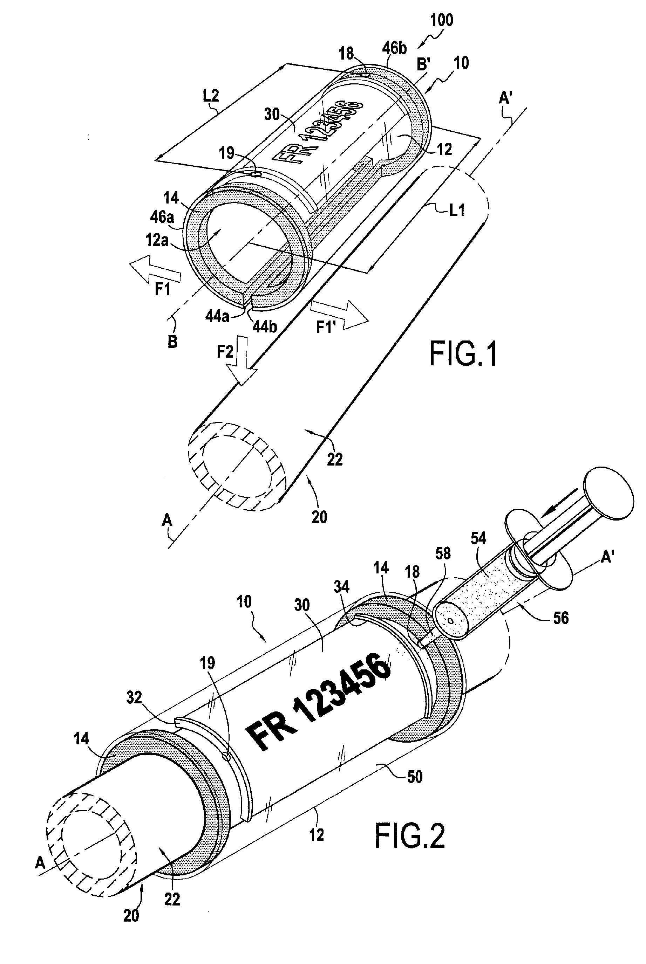

Sur la figure 1, on a représenté un dispositif de marquage 100 selon un premier mode de réalisation de l'invention, comprenant une pièce de marquage 10 destinée à être appliquée sur une surface 22 (ci-après « surface de support») d'un objet à marquer de façon pérenne, et un élément d'identification 30 de cet objet.

Dans l'exemple illustré sur la figure 1, l'objet à marquer est une bicyclette et la partie de cet objet visible sur la figure 1 est un tronçon d'un tube creux 20 d'axe A-A', formant le cadre de la bicyclette et constitué par exemple de métal peint.

L'élément d'identification 30 est une étiquette rectangulaire sur laquelle sont imprimées les informations essentielles au recouvrement de la bicyclette. Dans l'exemple, ces informations sont un numéro de série unique qui, bien que ce ne soit pas représenté, peut être assorti d'un numéro de hotline ou d'une adresse internet. Ces informations peuvent être enregistrées dans une base de données centrale, consultable via le site internet, ou par téléphone en contactant la hotline.

Selon un exemple avantageux, l'étiquette 30 est constituée de deux couches externes transparentes et d'une couche intermédiaire imprimée, en PVC, laminées à chaud.

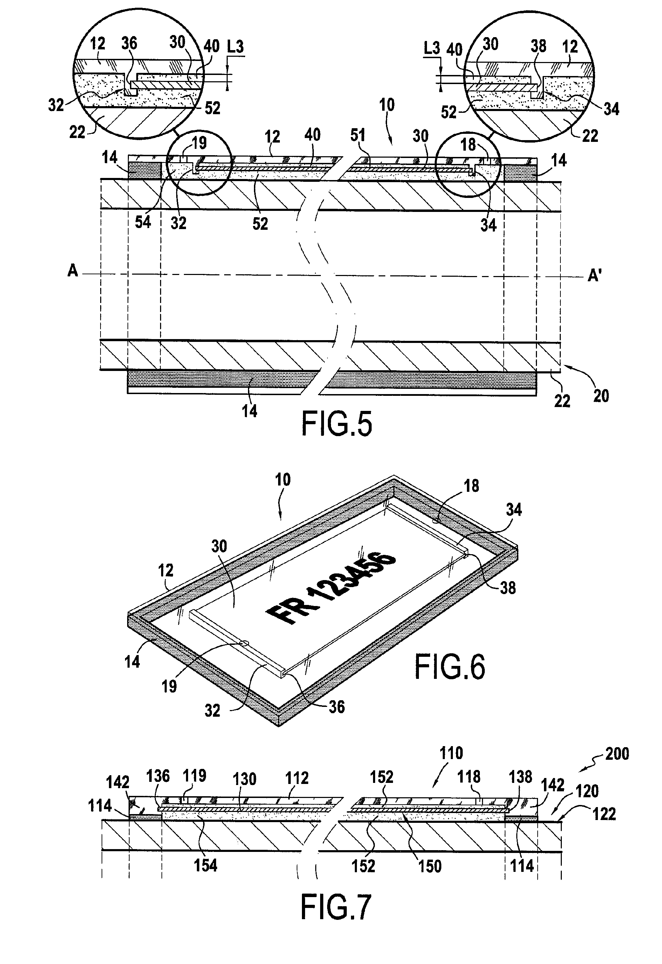

La pièce de marquage 10 comprend une paroi de recouvrement 12, des moyens adhésifs 14 adaptés pour faire adhérer ladite paroi de recouvrement 12 à la surface 22 du tube 20, et des moyens de support et d'entretoisement (représentés plus en détail sur la figure 5) destinés à maintenir l'élément d'identification 30 en regard et à distance de la paroi de recouvrement 12.

La paroi de recouvrement 12 forme, dans l'exemple, une paroi entièrement translucide.

Pour s'adapter à la forme du tube de cadre de bicyclette, elle présente une forme allongée, de longueur L1, et une section transversale en arc, d'axe B-B', s'étendant sur un secteur angulaire légèrement inférieur à 360°.

La paroi de recouvrement 12 est réalisée dans un matériau déformable pour permettre la mise en place de la pièce de marquage 10 sur la surface de support tubulaire 22. Pour faciliter le montage, elle est réalisée dans un matériau déformable élastiquement, par exemple en PVC.

La paroi de recouvrement 12 est percée de deux trous 18, 19 de faible diamètre dont les fonctions apparaîtront mieux à la lecture de la description à suivre. Chaque trou 18, 19 est formé à proximité de l'une des extrémités axiales de la paroi de recouvrement 12. Pour des raisons qui seront explicitées dans la suite, la distance L2 séparant les deux trous 18, 19 est choisie la plus grande possible.

Comme indiqué précédemment, la pièce de marquage 10 comprend des moyens adhésifs 14 fixés sur la face interne concave de la paroi de recouvrement 12, et adaptés pour adhérer à la surface de support 22 de l'objet à marquer. Dans l'exemple, ces moyens adhésifs 14 sont constitués par une couche d'adhésif puissant, d'épaisseur e1, qui s'étend de manière continue le long des bords de la face interne (i.e. le long des sections parallèles 44a, 44b et des extrémités axiales 46a, 46b) de la paroi de recouvrement 12, et définit ainsi un contour fermé.

Comme indiqué précédemment, la pièce de marquage 10 comporte également des surfaces de support et d'entretoisement destinées à maintenir l'étiquette 30.

Comme illustré plus en détail sur la figure 5, ces surfaces sont définies, dans l'exemple, par deux nervures 32, 34 faisant saillie depuis la face interne de la paroi de recouvrement 12 et comprenant chacune une fente 36, 38 destinée à recevoir une extrémité de l'étiquette 30. Chaque fente 36, 38 est espacée de la paroi de recouvrement 12 d'une distance L3 qui, dans l'exemple, est constante. Il en sera donc de même de l'étiquette 30, une fois celle-ci maintenue dans ces deux fentes 36, 38.

Bien que, dans l'exemple, les nervures 32, 34 soient définies dans deux plans radiaux (un plan radial étant un plan orthogonal à l'axe B-B'), elles pourraient tout aussi bien s'étendre selon deux plans axiaux.

Un exemple de mise en oeuvre du procédé de marquage selon la présente invention, utilisant le dispositif de marquage 100 décrit précédemment en référence aux figures 1 à 5, va à présent être décrit plus en détail.

Dans une première étape du procédé, la surface de support 22 du tube 20 est préparée à recevoir le dispositif.

Elle est poncée, de manière à obtenir une surface lisse, sur laquelle la pièce de marquage 10 pourra adhérer plus facilement.

Elle peut aussi être nettoyée et/ou dégraissée.

Dans une seconde étape du procédé, l'étiquette 30, souple, est courbée légèrement et glissée entre les fentes de réception 36, 38, qui la maintiennent à distance de la paroi translucide 12.

Les première et deuxième étapes ci-dessus peuvent évidemment être interverties.

Dans une troisième étape du procédé illustrée sur la figure 1, le dispositif de marquage 100 est appliqué sur le tube à marquer 20.

Pour cela, les deux sections droites 44a, 44b de la pièce de marquage 10 sont écartées l'une de l'autre (voir les flèches F1 et F1' sur la figure 1) et, une fois l'écartement suffisant, la pièce de marquage 10 est placée autour du tube 20 (voir la flèche F2 sur la figure 1), à un endroit choisi pour le marquage.

Les deux sections droites sont relâchées et, sous l'effet de l'élasticité de la paroi translucide 12, la couche d'adhésif 14 vient s'appliquer contre la surface de support 22 de l'objet 20.

La couche d'adhésif 14 assure le maintien en position de la pièce de marquage 10 et une parfaite étanchéité entre la pièce de marquage 10 et la surface de support 22.

Une chambre 50 est formée entre la surface de support 22 et la paroi de recouvrement 12, et l'étiquette 30 se retrouve emprisonnée dans cette chambre 50, comme illustré sur la figure 2.

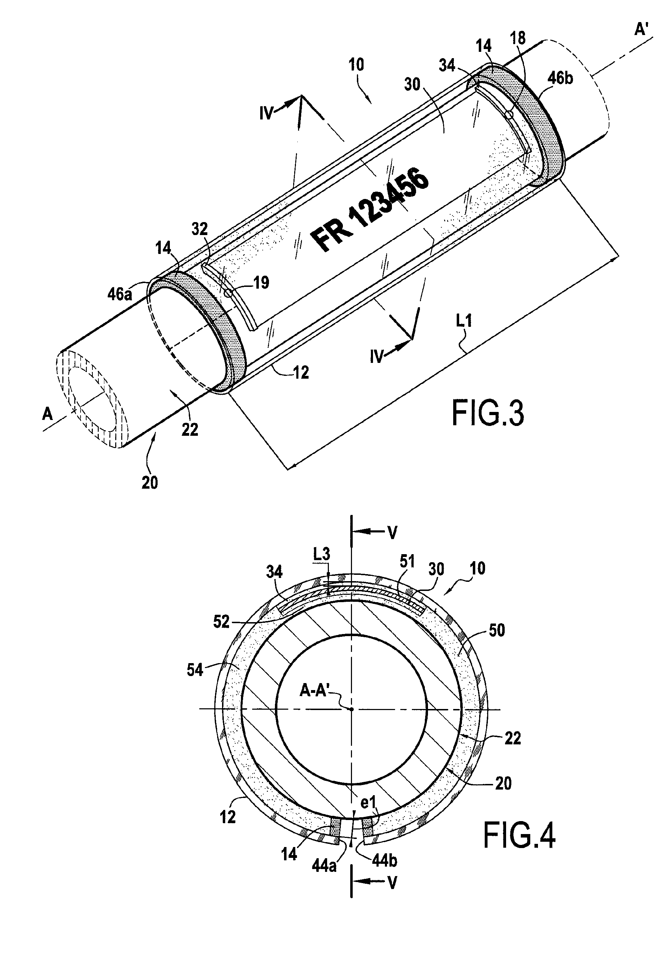

Grâce à l'agencement des fentes 36, 38 formant moyens de réception pour l'étiquette 30, les deux faces de l'étiquette 30 sont respectivement situées à distance de la paroi translucide 12 et de la surface de support 22. Sur la figure 4, on distingue un premier espacement 51 formé entre l'étiquette 30 et la paroi translucide 12, et un second espacement 52 formé entre l'étiquette 30 et la surface de support 22 du tube 20.

Dans une quatrième étape illustrée sur la figure 2, une colle liquide 54 est introduite dans la chambre 50 par le trou 18 de la paroi translucide 12.

La colle 54 utilisée est translucide, de sorte que l'inscription sur l'étiquette 30 reste visible même après son injection et son durcissement à l'intérieur de la chambre 50.

Avantageusement, la colle utilisée est une colle à prise ultra rapide, par exemple du type cyanoacrylate bi-composant avec accélérateur. Un exemple de produit actuellement sur le marché et pouvant être utilisé dans le procédé selon la présente invention est la colle référencée Loctite 3090 (marque déposée) par Henkel.

Selon une disposition avantageuse de l'invention, la colle 54 est conditionnée dans une seringue 56 telle qu'illustrée sur la figure 2.

L'embout 58 de la seringue 56 est adapté à coopérer avec le trou 18 formant orifice d'injection, de la paroi translucide 12.

Une fois l'embout 58 de la seringue 56 introduit dans le trou 18, l'opérateur presse sur la seringue 56 pour forcer la colle 54 à se répandre dans la chambre 50, et particulièrement dans le premier et le second espacement 51, 52.

Le second trou 19 de la paroi translucide 12 sert d'évent, et permet l'évacuation de l'air contenu dans la chambre 50 lors de l'injection de colle. Comme, de manière préférentielle, le trou 19 est placé le plus loin possible de l'orifice d'injection 18, il ne risque pas d'être obturé par la colle 54.

Le volume total de colle 54 introduit dans la chambre 50 est suffisant pour que l'étiquette 30 se retrouve noyée dans la colle 54, c'est-à-dire liée par celle-ci à la surface de support 22 de l'objet 20 à marquer. De préférence, la chambre 50 est entièrement remplie de colle.

La colle 54 fixe la pièce de marquage 10 au tube 20 de manière définitive, faisant de cette pièce de marquage 10 un moule perdu qui protège l'étiquette 30.

Quand bien même la pièce de marquage 10 serait détruite, l'étiquette 30 restant noyée dans la colle translucide 54, il est impossible de la retirer sans dégrader considérablement le tube 20.

Dans une étape supplémentaire (non représentée), une étiquette d'avertissement, de préférence autocollante, peut être collée sur la pièce de marquage 10, en la recouvrant entièrement. Cette étiquette d'avertissement peut notamment servir à indiquer que l'objet 20 est marqué et donc protégé contre le vol, ce qui procure un effet dissuasif à l'égard des voleurs.

Selon un autre exemple, un masque destiné à dissimuler les scories apparues lors de l'injection de colle et à améliorer l'aspect esthétique de l'objet marqué, peut être collé sur la pièce de marquage. Le masque peut par exemple présenter une forme adaptée à ne laisser entrevoir que l'élément d'identification 30.

La figure 6 illustre une variante de réalisation du dispositif de marquage 100 selon ce premier mode de réalisation de l'invention. Selon cette variante, la paroi de recouvrement est une plaque plane, ici d'épaisseur sensiblement constante, ce par quoi la pièce de marquage est adaptée au marquage d'un objet dont la surface de support est plane. Les éléments structurels identiques ou similaires à ceux du premier mode de réalisation comportent les mêmes références numériques que sur les figures 1 à 5. Toutes les remarques faites précédemment en liaison avec ces figures restent bien entendu valables et ne sont pas répétées.

La figure 7 est une vue partielle, en coupe longitudinale, d'un dispositif de marquage 200 selon un deuxième mode de réalisation de l'invention. Ce dispositif est, dans l'exemple, destiné à marquer un objet 120 similaire à celui (20) représenté sur la figure 1. Le dispositif de marquage 200 comprend une pièce de marquage 110 et une étiquette 130. Seules les différences avec le premier mode de réalisation des figures 1 à 5, sont décrites en détail dans la suite. Les éléments structurels identiques ou similaires avec ceux du premier mode de réalisation comportent les mêmes références numériques incrémentées de 100.

Selon ce deuxième mode de réalisation, la paroi de recouvrement 112 présente une nervure 142 formant rebord s'étendant sur tout le périmètre de sa face interne, c'est-à-dire le long des deux sections droites parallèles et des deux sections d'extrémité axiales, de manière à définir un contour fermé. Une couche d'adhésif 114, adaptée pour adhérer à la surface de support 122 de l'objet, s'étend de manière continue sur le rebord 142, définissant également un contour fermé.

Selon ce mode de réalisation, des fentes 136, 138 formant surfaces de support et d'entretoisement pour l'étiquette 130, sont formées dans le rebord 142.

Les exemples de réalisation décrits précédemment et le procédé y afférant ne sont cependant pas limitatifs de la présente invention.

En particulier, seule une portion de la paroi de recouvrement peut être translucide. Dans ce cas, l'élément d'identification doit être placé en regard de ladite portion translucide lorsqu'il est emprisonné entre la surface de support et la pièce de marquage, et ce afin que les informations d'identification qu'il comporte restent visibles.

Selon un autre exemple, la pièce de marquage et notamment sa paroi translucide, peuvent présenter toute forme adaptée pour délimiter, avec la surface de support, une chambre apte à contenir l'élément d'identification. Avantageusement, la chambre présente des dimensions suffisantes pour que des espacements puissent être conservés entre l'élément d'identification et la paroi translucide de la pièce de marquage d'une part, et entre l'élément d'identification et la surface de support de l'objet d'autre part.

Par exemple, dans le cas où la surface de support est une surface plane (cas de la figure 6), la pièce de marquage peut présenter une forme générale prismatique ou encore hémisphérique.

Par ailleurs, la paroi translucide de la pièce de marquage peut être réalisée dans un matériau rigide, c'est-à-dire non déformable, lorsque la forme de l'objet à marquer (i.e. la forme de la surface de support) et celle de la paroi translucide s'y prêtent.

En outre, les surfaces de support et d'entretoisement pour l'élément d'identification ne sont pas limitées à des fentes réalisées dans des nervures telles que décrites précédemment. Elles peuvent se présenter sous la forme de languettes sur lesquelles l'élément d'identification peut être collé, sous la forme de pinces, etc.

Selon un autre mode de réalisation non représenté, la pièce de marquage peut aussi être dépourvue de moyens de réception pour l'élément d'identification. Dans ce cas, l'élément d'identification est, dans une étape préalable du procédé de marquage, maintenue ou fixée non pas à la pièce de marquage mais à la surface de support de l'objet. Par exemple, l'élément d'identification peut être fixé à la surface de support au moyen de bandes adhésives d'épaisseur suffisante, de sorte qu'un espacement est conservé entre l'élément d'identification et la surface de support.

Dans certains cas, la pièce de marquage peut également être dépourvue de moyens adhésifs. Il faut alors que la paroi translucide présente une élasticité suffisante pour pouvoir se clipser sur l'objet à marquer et pour maintenir un contact satisfaisant entre la pièce de marquage et la surface de support, ou que la pièce de marquage soit maintenue en appui contre la surface de support par des moyens extérieurs (manuellement par l'utilisateur par exemple).

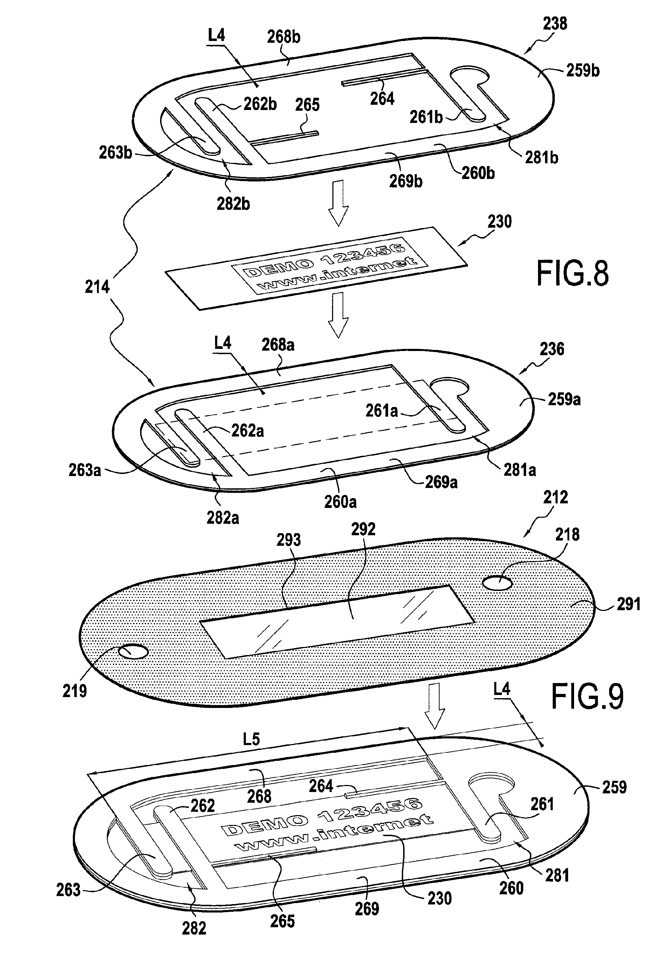

Sur les figures 8 à 13, on a représenté un dispositif de marquage 300 selon un troisième mode de réalisation, qui est un mode de réalisation préféré de la présente invention, notamment parce qu'il permet un marquage universel.

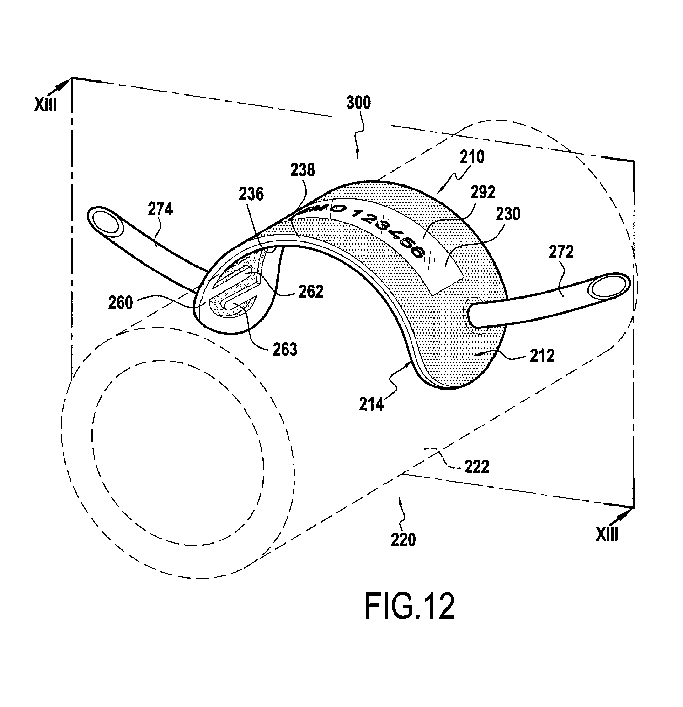

Le dispositif de marquage 300 comprend, comme dans les modes de réalisation précédents, une pièce de marquage 210 (voir la figure 12) et un élément d'identification 230 de l'objet à marquer, ici sous la forme d'une étiquette rectangulaire, sur laquelle est inscrit un numéro de série éventuellement assorti d'un numéro de hotline ou d'une adresse internet.

Selon ce mode de réalisation, la pièce de marquage 210 comprend un cadre 214 tel que représenté sur la figure 8, et une paroi de recouvrement 212 telle qu'illustrée sur la figure 9, adaptée pour être fixée à la partie supérieure 238 du cadre 214, comprenant au moins une paroi translucide 292 laissant entrevoir l'étiquette 230, et munie, à l'une de ses extrémités, d'un premier trou 218 pour le passage de la colle, et, à son extrémité opposée, d'un second trou pour l'évacuation 219 de l'air et éventuellement de la colle, comme il sera décrit plus en détail dans la suite.

Comme dans les modes de réalisation précédents, la pièce de marquage 210 est telle, qu'une fois appliquée sur une surface de support 222 de l'objet à marquer 220, elle délimite avec ladite surface de support 222 une chambre 250.

Les trous 218, 219 de la paroi de recouvrement 212 communiquent avec la chambre 250, qui peut ainsi être remplie de colle 254.

Le cadre 214 comprend deux parties, inférieure 236 et supérieure 238, de structure au moins quasi identique, et adaptées à être superposées de la manière illustrée sur la figure 8. Selon d'autres exemples, le cadre 214 peut comprendre plus de deux parties adaptées à être superposées.

On notera que, sur les figures 8, 11 et 13 qui illustrent en détail les parties inférieure et supérieure du cadre 214, les différents éléments, identiques et superposés, ont été désignés par la référence numérique correspondant audit élément, agrémentée de la lettre « a » pour la partie inférieure 236 et de la lettre « b » pour la partie supérieure 238.

Dans l'exemple, chaque partie 236, 238 du cadre 214 est constitué d'un matériau adhésif, de sorte que le cadre 214 adhère à la surface de support 222 de l'objet à marquer 220, les deux parties 236 et 238 du cadre 214 adhèrent entre elles ainsi qu'à l'élément d'identification 230, et la partie supérieure 238 du cadre 214 adhère à la paroi de recouvrement 212. Dans l'exemple, l'adhésif utilisé est souple. Il s'agit par exemple d'un adhésif de type 4943, commercialisé par la société 3M.

Selon un autre exemple, les parties inférieure 236 et supérieure 238 du cadre (ou l'une de ces parties) peuvent être réalisées dans un matériau non adhésif. Dans ce cas, elles peuvent être liées entre elles, et à la paroi de recouvrement, par un adhésif rapporté. De même, la partie inférieure 236 du cadre 214 peut être recouverte d'un adhésif destiné à adhérer à la surface de support 222 de l'objet à marquer 220.

Chaque partie 236, 238 du cadre 214 présente une épaisseur (respectivement e2, e3) sensiblement constante, généralement comprise entre 1 et 2 mm, et de préférence égale à 1,2 mm. On notera qu'une épaisseur suffisante du cadre 214 permet de compenser des irrégularités de surface de l'objet à marquer, et de garantir une bonne étanchéité entre la pièce de marquage 210 et la surface de support 222, malgré ces irrégularités.

Le cadre 214 comprend une bordure continue 260 fermée sur elle-même. Dans l'exemple, la largeur L4 de la bordure 260 est sensiblement constante sur une grande partie de sa longueur, et le cadre 214 délimite un contour fermé de forme générale oblongue.

Comme il ressortira de la suite de la description, il est avantageux de prévoir que la bordure 260 comporte une portion renforcée 259, de plus grande largeur, à l'une des extrémités du cadre 214 (celle située du côté de l'orifice d'injection 218 pour la colle).

De manière avantageuse, et pour des raisons qui seront également décrites plus en détail dans la suite, la pièce de marquage 210 peut comporter des obstacles répartiteurs, adaptés pour être positionnés dans la chambre 250 une fois la pièce de marquage 210 appliquée sur la surface de support 222, et destinés à guider la colle à l'intérieur de cette chambre.

Dans l'exemple, plusieurs guides 261, 262, 263 s'étendent depuis la bordure 260 du cadre 214, de préférence perpendiculairement aux côtés longs 268, 269 dudit cadre 214, et alternativement depuis l'un puis l'autre desdits côtés.

Un premier guide 261 est situé à proximité de la portion de bordure renforcée 259, et forme avec cette portion de bordure 259 une partie de chicane 281.

Un second et un troisième guide 262, 263 sont situés à proximité de l'extrémité opposée du cadre 214, et forment une chicane 282.

Dans l'exemple, les premier et troisième guides sont espacés d'une distance L5 sensiblement égale à la longueur de l'étiquette 230.

Lors de la fabrication de la pièce de marquage 210, et comme illustré sur la figure 8, l'étiquette 230 peut être prise en étau entre les deux parties 236, 238 du cadre 214, qui forment ainsi des surfaces de support et d'entretoisement pour l'étiquette 230.

Comme illustré sur la figure 9, la paroi de recouvrement 212 est destinée à venir en contact avec le cadre 214, et notamment avec sa bordure 260, sur toute la longueur de celle-ci. La forme de la paroi de recouvrement 212, ici oblongue, est adaptée à celle de la bordure 260 du cadre 214.

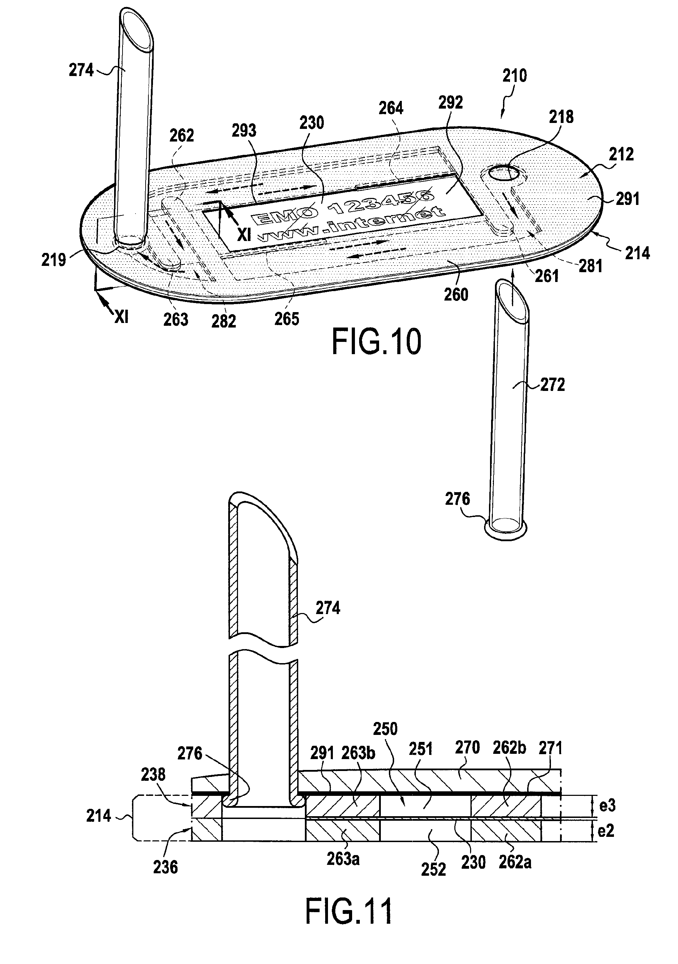

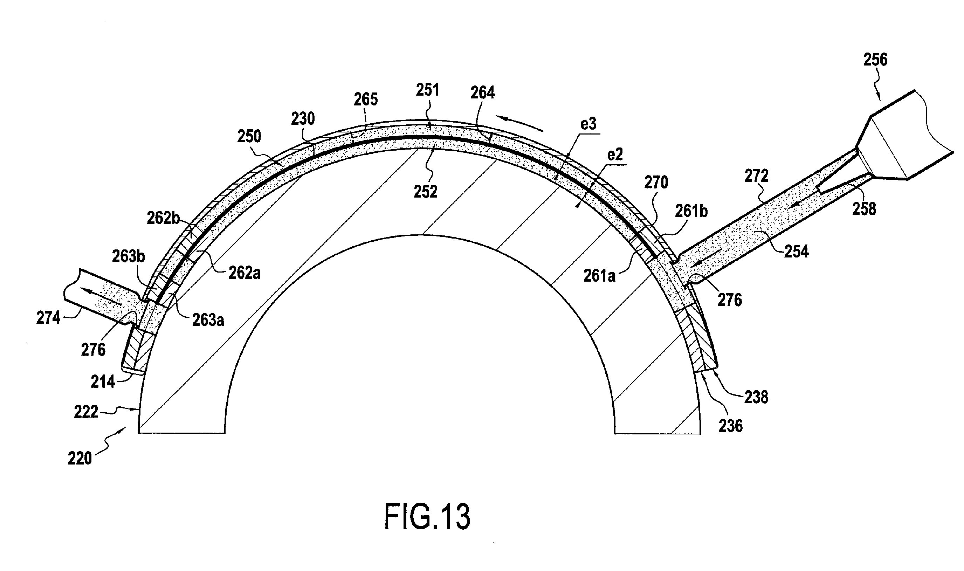

La paroi de recouvrement 212 comprend une étiquette de base, par exemple en résine (en vinyle notamment), recouverte d'une bulle de résine translucide 270 (voir la figure 13). Dans l'exemple, l'étiquette de base comprend une zone opaque 291 (représentée par des hachures sur la figure 10), imprimable et personnalisable. Elle comprend en outre une zone translucide et non imprimée (dont le contour est représenté, sur les figures 9 et 10 par un trait épais 293), destinée à venir en regard de l'étiquette 230. La pièce de marquage comprend donc une fenêtre (ou paroi) translucide 292, adaptée pour laisser entrevoir l'étiquette 230.

De manière avantageuse, un ou plusieurs éléments formant entretoises, sont prévus pour être positionnés entre l'étiquette 230 (avantageusement le bord de l'étiquette ou toute autre partie non imprimée de l'étiquette afin de ne pas masquer les inscriptions permettant l'identification de l'objet) et la paroi de recouvrement 212, de manière à conserver un espacement 251 entre lesdites pièces, et en particulier entre l'élément d'identification 230 et la paroi translucide 292 (notamment lorsque la pièce de marquage 210 est courbée, comme illustré par exemple sur la figure 12).

Dans l'exemple illustré, la partie supérieure 238 du cadre 214 comporte, outre les parties supérieures 261b, 262b, 263b des guides principaux 261, 262, 263, deux saillies 264, 265. Ces saillies 264, 265 sont plus étroites, et s'étendent depuis les parties supérieures 261b, 262b respectivement du premier et du second guide 161, 162, selon une direction sensiblement parallèle aux côtés longs 268b, 269b. Ces saillies 264, 265 ont une fonction d'entretoise telle que définie précédemment. Elles forment également des guides qui permettent de guider le cheminement d'une partie de la colle à l'intérieur de la chambre 250.

Comme indiqué précédemment et comme illustré sur les figures 9 et 10, la paroi de recouvrement 212 comporte un trou 218, 219 à chacune de ses extrémités.

Les trous 218, 219 et le cadre 214 sont agencés de sorte qu'ils ne se superposent pas et que les trous 218, 219 ne sont pas obturés par le cadre 214.

Dans l'exemple, le premier trou 218, qui forme un orifice d'injection pour la colle, est positionné entre le premier guide 261 et l'extrémité renforcée 259 du cadre 214. Le second trou 219, qui forme un orifice d'évacuation pour l'air et la colle, est positionné entre le troisième guide 263 et l'extrémité opposée du cadre 214.

Comme illustré sur la figure 10, un tube 272, 274 est inséré dans chaque trou 218, 219. De manière avantageuse, chaque tube 272, 274 présente un diamètre supérieur au diamètre du trou de la paroi de recouvrement 212 dans lequel il est inséré, la compression du tube 272, 274 à l'intérieur du trou 218, 219 assurant une bonne étanchéité. Les tubes 272, 274 sont de préférence réalisés dans un matériau souple, par exemple en silicone. Pour des raisons qui seront décrites dans la suite, les tubes sont avantageusement réalisés dans un matériau translucide. Enfin, chaque tube peut comporter, à son extrémité destinée à venir se fixer sur la paroi de recouvrement 212, une collerette 276 (ou un évasement), du type « collet battu », adaptée à venir en appui contre la face inférieure de la paroi de recouvrement, et à assurer le maintien du tube à l'intérieur du trou. La figure 11 montre en détail le tube 274, une fois inséré dans le second trou 219.

Lors de son utilisation, et comme indiqué précédemment, la pièce de marquage 210 est appliquée sur la surface de support 222 de l'objet à marquer 220. Comme elle est réalisée entièrement avec des matériaux souples, la pièce de marquage 210 s'adapte parfaitement à des objets de formes diverses, et notamment des pièces cylindriques de divers diamètres.

La figure 12 illustre la pièce de marquage 210 collée sur l'objet à marquer, ici un tube de cadre de bicyclette comme dans les premier et second modes de réalisation décrits précédemment.

On notera que, dans cette position, outre le premier espacement 251 conservé entre l'étiquette 230 et la paroi translucide 292, un second espacement 252 (correspondant à l'épaisseur e2 de la partie inférieure 236 du cadre 214) est conservé entre l'étiquette 230 et la surface de support 222 de l'objet à marquer 220.

Comme dans les modes de réalisation précédents, de la colle 254 est injectée à l'intérieur de la chambre 250 formée entre la surface de support 222 et la pièce de marquage 210. Pour cela, comme illustré sur la figure 13, l'embout 258 d'un dispositif d'injection, par exemple une seringue 256, est inséré dans le premier tube 272, au niveau de son extrémité distale. L'injection par le tube 272 permet d'éviter tout débordement de colle sur la face externe de la paroi de recouvrement 212, et facilite l'utilisation du dispositif.

Comme le cadre 214 est renforcé à proximité de l'orifice d'injection 218, on évite que la colle 254 soulève la pièce de marquage 210 sous l'effet de la pression de l'injection.

Comme illustré par les flèches sur la figure 10, les guides 261 à 265 sont agencés de sorte que la colle 254 est contrainte de traverser de part et d'autre la chambre 250, dans la direction transversale, pour atteindre le second trou 219. On évite ainsi que la colle 254 ne s'échappe par le trou d'évacuation 219, sans avoir atteint ou suffisamment atteint l'étiquette 230.

Lorsqu'elle a atteint le second trou 219, la colle 254 commence à être évacuée par le second tube 274. Ce tube 274 étant avantageusement translucide, l'utilisateur peut facilement détecter le moment où la colle 254 commence à sortir de la chambre 250, qui correspond au moment où l'injection peut être stoppée. Le second tube 274 permet d'éviter que les doigts de l'utilisateur ou la face externe de la paroi de recouvrement soi(en)t souillé(s) par la colle 254. Comme indiqué précédemment, il permet également à l'utilisateur de détecter facilement le moment où l'injection peut être arrêtée.

Une fois la colle 254 durcie, les tubes 272, 274 sont vrillés ou fléchis vers le côté, de sorte qu'ils se brisent au niveau de leur extrémité inférieure (i.e. celle jouxtant la paroi de recouvrement 212).

Un dispositif de marquage selon la présente invention peut être vendu, par exemple en grandes surfaces, comme l'un des éléments d'un kit de marquage permanent. Un tel kit de marquage peut être constitué d'au moins un dispositif de marquage selon l'invention, et d'au moins un dispositif d'injection de colle, par exemple sous forme de seringue, apte à coopérer avec l'un des trous de la pièce de marquage. L'élément d'identification peut être une étiquette 30 vierge à compléter par un utilisateur. Elle peut notamment comporter des champs à compléter du type « nom », « prénom », « adresse », « numéro de série », etc. Il peut aussi s'agir d'une étiquette sur laquelle ont été pré-imprimées des informations uniques permettant d'identifier l'objet (code, numéro d'identification, etc). Selon la pièce de marquage considérée (notamment dans les premier et deuxième modes de réalisation décrits précédemment), le kit peut également contenir un autocollant d'avertissement, à vocation dissuasive, destiné à être collé sur la pièce de marquage une fois celui-ci en place, et indiquant que l'objet est marqué et donc protégé contre le vol.

## Revendications

1. Procédé pour marquer un objet (20) de manière pérenne, comprenant au moins la succession d'étapes suivantes :
- on fournit une pièce de marquage (10, 110, 210) comprenant au moins une paroi translucide (12, 112, 292), et configurée de sorte qu'une fois appliquée sur une surface de support (22, 122, 222) de l'objet à marquer (20, 120, 220), elle délimite une chambre (50, 150, 250) entre ladite surface de support (22, 122, 222) et ladite paroi translucide,
- on applique la pièce de marquage (10, 110, 210) sur la surface de support (22, 122, 222), de manière à emprisonner un élément d'identification (30, 130, 230) de l'objet (20, 120, 220) dans la chambre (50, 150, 250), et
- on introduit dans la chambre (50, 150, 250), par un trou (18, 118, 218) de la pièce de marquage (10, 110, 210) qui communique avec ladite chambre (50, 150, 250), un volume d'une colle translucide (54, 154, 254) suffisant pour que l'élément d'identification (30, 130, 230) soit noyé dans ledit volume de colle (54, 154, 254).

2. Procédé selon la revendication 1, dans lequel au moins une partie de paroi de la chambre (50, 150, 250) est formée par la surface de support (22, 122, 222) de l'objet à marquer (20, 120, 220).

3. Procédé selon la revendication 1, dans lequel la pièce de marquage (10, 110, 210) est appliquée sur la surface de support (22, 122, 222) de manière à emprisonner l'élément d'identification (30, 130, 230) dans la chambre (50, 150, 250) en conservant un premier et un second espacement (51, 52, 151, 152, 251, 252) entre l'élément d'identification (30, 130, 230) et la surface de support (22, 122, 222) et entre l'élément d'identification (30, 130, 230) et la paroi translucide (12, 112, 292).

4. Procédé selon l'une quelconque des revendications 1 à 3, dans lequel préalablement à l'application de la pièce de marquage (10, 110, 210) sur la surface de support (22, 122, 222), on fait coopérer l'élément d'identification (30, 130, 230) avec des surfaces de support et d'entretoisement (36, 38, 136, 138, 236, 238) prévues sur la pièce de marquage (10, 110, 210), de manière à le rendre solidaire de ladite pièce de marquage.

5. Procédé selon l'une quelconque des revendications 1 à 3, dans lequel, préalablement à l'application de la pièce de marquage (10, 110, 210) sur la surface de support (22, 122, 222), on fixe l'élément d'identification (30, 130, 230) sur la surface de support (22, 122, 222) à l'aide de moyens adhésifs.

6. Dispositif (100, 200, 300) pour marquer un objet de manière pérenne, **caractérisé en ce qu'**il comprend
une pièce de marquage (10, 110, 210) comprenant une paroi translucide (12, 112, 292) et apte à être appliquée sur une surface de support (22, 122, 222) d'un objet à marquer (20, 120, 220) en délimitant une chambre (50, 150, 250) entre ladite surface de support (22, 122, 222) et ladite paroi translucide (12, 112, 292), et
un élément d'identification (30, 130, 230), apte à être emprisonné dans ladite chambre (50, 150, 250), et
**en ce que** la pièce de marquage (10, 110, 210) présente au moins un premier trou (18, 118, 218), qui est apte à communiquer avec la chambre (50, 150, 250) pour permettre l'introduction de colle dans cette chambre.

7. Dispositif (100, 200, 300) selon la revendication 6, dans lequel la pièce de marquage (10, 110, 210) est configurée de sorte qu'au moins une partie de paroi de la chambre (50, 150, 250) est formée par la surface de support (22, 122, 222).

8. Dispositif (100, 200, 300) selon la revendication 6 ou 7, dans lequel l'élément d'identification (30, 130, 230) est apte à être emprisonné dans la chambre (50, 150, 250) avec un premier et un deuxième espacement (51, 52, 151, 152, 251, 252) entre l'élément d'identification (30, 130, 230) et la surface de support (22, 122, 222) et entre l'élément d'identification (30, 130, 230) et la paroi translucide (12, 112, 292).

9. Dispositif (100, 200, 300) selon l'une quelconque des revendications 6 à 8, dans lequel la pièce de marquage (10, 110, 210) présente en outre au moins un second trou (19, 119, 219) situé à une extrémité de la pièce de marquage (10, 110, 210) qui est opposée à celle où se situe ledit premier trou (18, 118, 218).

10. Dispositif (100, 200, 300) selon l'une quelconque des revendications 6 à 9, dans lequel la pièce de marquage (10, 110, 210) comprend en outre des surfaces de support et d'entretoisement (36, 38, 136, 138, 236, 238) destinées à maintenir l'élément d'identification (30, 130, 230) en regard et à distance de la paroi translucide (12, 112, 292).

11. Dispositif (100, 200, 300) selon l'une quelconque des revendications 6 à 10, dans lequel la pièce de marquage (10, 110, 210) comprend des moyens adhésifs (14, 114, 214) destinés à adhérer à une surface de support (22, 122, 222) de l'objet à marquer (20, 120, 220).

12. Dispositif (100, 200, 300) selon la revendication 11, dans lequel les moyens adhésifs (14, 114, 214) s'étendent sur tout le périmètre de la pièce de marquage (10, 110, 210) et définissent un contour fermé.

13. Dispositif (100, 200, 300) selon l'une quelconque des revendications 6 à 12, dans lequel la pièce de marquage comporte au moins un guide (261, 262, 263, 264, 265) adapté pour être positionné à l'intérieur de la chambre (50, 150, 250) une fois la pièce de marquage appliquée sur la surface de support, et pour guider le cheminement de la colle à l'intérieur de ladite chambre (50, 150, 250).

14. Dispositif (300) selon la revendication 9 et l'une quelconque des revendications 6 à 13, dans lequel la pièce de marquage (210) comprend deux tubes amovibles ou cassables (272, 274) situés respectivement dans le prolongement du premier et du second trou (218, 219), pour faciliter l'introduction de la colle à l'intérieur de la chambre (250) et son évacuation hors de celle-ci.

15. Dispositif (300) selon la revendication 10, et l'une quelconque des revendications 6 à 14, dans lequel la pièce de marquage (210) comprend au moins une partie inférieure (236) et une partie supérieure (238) agencées de sorte que l'élément d'identification (230) peut être pris en étau entre lesdites parties (236, 238).

16. Dispositif (100, 200) selon l'une quelconque des revendications 6 à 15, dans lequel la pièce de marquage (10, 110, 210) présente une forme concave vers l'objet à marquer (20).

17. Dispositif (100, 200, 300) selon l'une quelconque des revendications 6 à 16, dans lequel la paroi translucide (292) est réalisée en résine.

18. Dispositif (100, 200, 300) selon l'une quelconque des revendications 6 à 16, dans lequel la paroi translucide est réalisée en PVC.

19. Kit apte à être utilisé pour marquer un objet de manière pérenne, comprenant un dispositif (100, 200, 300) selon l'une quelconque des revendications 6 à 18 et un dispositif d'injection de colle (56, 256) dont l'embout (58, 258) est apte à coopérer avec un trou d'injection (18, 118, 218) de la pièce de marquage (10, 110, 210).

## Patentansprüche

1. Verfahren zur beständigen Kennzeichnung eines Gegenstandes (20), umfassend mindestens die Aufeinanderfolge der folgenden Schritte:
- Bereitstellung eines Kennzeichnungsteils (10, 110, 210), umfassend mindestens eine durchscheinende Wand (12, 112, 292) und derart ausgeführt, dass es, wenn es auf eine Stützfläche (22, 122, 222) des zu kennzeichnenden Gegenstandes (20, 120, 220) aufgebracht ist, eine Kammer (50, 150, 250) zwischen der Stützfläche (22, 122, 222) und der durchscheinenden Wand begrenzt,
- Aufbringen des Kennzeichnungsteils (10, 110, 210) auf die Stützfläche (22, 122, 222), um ein Identifikationselement (30, 130, 230) des Gegenstandes (20, 120, 220) in der Kammer (50, 150, 250) einzuschließen,
- Einführen eines Volumens eines durchscheinenden Klebers (54, 154, 254) in die Kammer (50, 150, 250) über ein mit der Kammer (50, 150, 250) in Verbindung stehendes Loch (18, 118, 218) des Kennzeichnungsteils (10, 110, 210), wobei das Volumen des Klebers (54, 154, 254) ausreicht, das Identifikationselement (30, 130, 230) darin zu versenken.

2. Verfahren nach Anspruch 1, bei dem mindestens ein Teil der Wand der Kammer (50, 150, 250) von der Stützfläche (22, 122, 222) des zu kennzeichnenden Gegenstandes (20, 120, 220) gebildet ist.

3. Verfahren nach Anspruch 1, bei dem das Kennzeichnungsteil (10, 110, 210) auf die Stützfläche (22, 122, 222) aufgebracht wird, um das Identifikationselement (30, 130, 230) in der Kammer (50, 150, 250) einzuschließen, wobei ein erster und ein zweiter Raum (51, 52, 151, 152, 251, 252) zwischen dem Identifikationselement (30, 130, 230) und der Stützfläche (22, 122, 222) und zwischen dem Identifikationselement (30, 130, 230) und der durchscheinenden Wand (12, 112, 292) ausgenommen werden.

4. Verfahren nach einem der Ansprüche 1 bis 3, bei dem vor dem Aufbringen des Kennzeichnungsteils (10, 110, 210) auf die Stützfläche (22, 122, 222) das Identifikationselement (30, 130, 230) mit Stütz- und Verstrebungsflächen (36, 38, 136, 138, 236, 238), die auf dem Kennzeichnungsteil (10, 110, 210) vorgesehen sind, zum Zusammenwirken gebracht werden, um es mit dem Kennzeichnungsteil zu verbinden.

5. Verfahren nach einem der Ansprüche 1 bis 3, bei dem vor dem Aufbringen des Kennzeichnungsteils (10, 110, 210) auf die Stützfläche (22, 122, 222) das Identifikationselement (30, 130, 230) auf der Stützfläche (22, 122, 222) mit Hilfe von Haftmitteln befestigt wird.

6. Vorrichtung (100, 200, 300) zur dauerhaften Kennzeichnung eines Gegenstandes, **dadurch gekennzeichnet, dass** sie folgendes umfasst:
- ein Kennzeichnungsteil (10, 110, 210), umfassend eine durchscheinende Wand (12, 112, 292) und dazu geeignet, auf eine Stützfläche (22, 122, 222) des zu kennzeichnenden Gegenstandes (20, 120, 220) aufgebracht zu werden, wobei eine Kammer (50, 150, 250) zwischen der Stützfläche (22, 122, 222) und der durchscheinenden Wand (12, 112, 292) begrenzt wird, und
- ein Identifikationselement (30, 130, 230), das geeignet ist, in der Kammer (50, 150, 250) eingeschlossen zu werden,
und dass das Kennzeichnungsteil (10, 110, 210) mindestens ein erstes Loch (18, 118, 218) aufweist, das geeignet ist, mit der Kammer (50, 150, 250) in Verbindung zu stehen, um die Einführung eines Klebers in diese Kammer zu ermöglichen.

7. Vorrichtung (100, 200, 300) nach Anspruch 6, bei der das Kennzeichnungsteil (10, 110, 210) derart ausgeführt ist, dass mindestens ein Wandteil der Kammer (50, 150, 250) von der Stützfläche (22, 122, 222) gebildet ist.

8. Vorrichtung (100, 200, 300) nach Anspruch 6 oder 7, bei der das Identifikationselement (30, 130, 230) geeignet ist, in der Kammer (50, 150, 250) mit einem ersten und einem zweiten Abstandsraum (51, 52, 151, 152, 251, 252) zwischen dem Identifikationselement (30, 130, 230) und der Stützfläche (22, 122, 222) und zwischen dem Identifikationselement (30, 130, 230) und der durchscheinenden Wand (12, 112, 292) eingeschlossen zu werden.

9. Vorrichtung (100, 200, 300) nach einem der Ansprüche 6 bis 8, bei der das Kennzeichnungsteil (10, 110, 210) ferner mindestens ein zweites Loch (19, 119, 219) aufweist, das sich an einem Ende des Kennzeichnungsteils (10, 110, 210) befindet, das zu jenem, an dem sich das erste Loch (18, 118, 218) befindet, entgegengesetzt ist.

10. Vorrichtung (100, 200, 300) nach einem der Ansprüche 6 bis 9, bei der das Kennzeichnungsteil (10, 110, 210) ferner Stütz- und Verstrebungsflächen (36, 38, 136, 138, 236, 238) umfasst, die dazu bestimmt sind, das Identifikationselement (30, 130, 239) gegenüber und im Abstand zu der durchscheinenden Wand (12, 112, 292) zu halten.

11. Vorrichtung (100, 200, 300) nach einem der Ansprüche 6 bis 10, bei der das Kennzeichnungsteil (10, 110, 210) Haftmittel (14, 114, 214) umfasst, die dazu bestimmt sind, an einer Stützfläche (22, 122, 222) des zu kennzeichnenden Teils (20, 120, 220) anzuhaften.

12. Vorrichtung (100, 200, 300) nach Anspruch 11, bei der sich die Haftmittel (14, 114, 214) auf dem gesamten Umfang des Kennzeichnungsteils (10, 110, 210) erstrecken und eine geschlossene Kontur definieren.

13. Vorrichtung (100, 200, 300) nach einem der Ansprüche 6 bis 12, bei der das Kennzeichnungsteil mindestens eine Führung (261, 262, 263, 264, 265) umfasst, die dazu vorgesehen ist, im Inneren der Kammer (50, 150, 250) positioniert zu werden, wenn das Kennzeichnungsteil auf die Stützfläche aufgebracht ist, und die Beförderung des Klebers im Inneren der Kammer (50, 150, 250) zu führen.

14. Vorrichtung (300) nach Anspruch und einem der Ansprüche 6 bis 13, bei der das Kennzeichnungsteil (210) zwei abnehmbare oder zerbrechbare Rohre (272, 274) umfasst, die sich in der Verlängerung des ersten bzw. des zweiten Loches (218, 219) befinden, um die Einführung des Klebers in das Innere der Kammer (250) und seine Ableitung aus dieser zu erleichtern.

15. Vorrichtung (300) nach Anspruch 10 und einem der Ansprüche 6 bis 14, bei der das Kennzeichnungsteil (210) mindestens ein unteres Teil (236) und ein oberes Teil (238) umfasst, die derart angeordnet sind, dass das Identifikationselement (230) zwischen den Teilen (236, 238) eingespannt werden kann.

16. Vorrichtung (100, 200) nach einem der Ansprüche 6 bis 15, bei der das Kennzeichnungsteil (10, 110, 210) eine konkave Form zu dem zu kennzeichnenden Gegenstand (20) hin aufweist.

17. Vorrichtung (100, 200, 300) nach einem der Ansprüche 6 bis 16, bei der die durchscheinende Wand (292) aus Harz hergestellt ist.

18. Vorrichtung (100, 200, 300) nach einem der Ansprüche 6 bis 16, bei der die durchscheinende Wand aus PVC hergestellt ist.

19. Bausatz, der geeignet ist, zur dauerhaften Kennzeichnung eines Gegenstandes verwendet zu werden, umfassend eine Vorrichtung (100, 200, 300) nach einem der Ansprüche 6 bis 18 und eine Vorrichtung zum Einspritzen von Kleber (56, 256), deren Ansatz (58, 258) geeignet ist, mit einem Einspritzloch (18, 118, 218) des Kennzeichnungsteils (10, 110, 210) zusammenzuwirken.

## Claims

1. A method of marking an article (20) in permanent manner, the method comprising at least the following succession of steps:
· providing a marking piece (10, 110, 210) having at least one translucent wall (12, 112, 292), and configured so that once applied against a support surface (22, 122, 222) of the article for marking (20, 120, 220), it defines a chamber (50, 150, 250) between said support surface (22, 122, 222) and said translucent wall;
· applying the marking piece (10, 110, 210) to the support surface (22, 122, 222) in such a manner as to hold captive in the chamber (50, 150, 250) an identifier element (30, 130, 230) for identifying the article (20, 120, 220); and
· introducing a volume of translucent adhesive (54, 154, 254) into the chamber (50, 150, 250) via a hole (18, 118, 218) in the marking piece (10, 110, 210) that communicates with said chamber (50, 150, 250), said volume of adhesive (54, 154, 254) being sufficient for the identifier element (30, 130, 230) to be embedded therein.

2. A method according to claim 1, wherein at least a portion of the chamber wall (50, 150, 250) is formed by the support surface (22, 122, 222) of the article for marking (20, 120, 220).

3. A method according to claim 1, wherein the marking piece (10, 110, 210) is supplied to the support surface (22, 122, 222) in such a manner as to hold the identifier element (30, 130, 230) captive in the chamber (50, 150, 250) while conserving first and second spaces (51, 52, 151, 152, 251, 252) between the identifier element (30, 130, 230) and the support surface (22, 122, 222) and between the identifier element (30, 130, 230) and the translucent wall (12, 112, 292).

4. A method according to any one of claims 1 to 3, wherein, prior to applying the marking piece (10, 110, 210) to the support surface (22, 122, 222), the identifier element (30, 130, 230) is made to co-operate with support and spacer surfaces (36, 38, 136, 138, 236, 238) provided on the marking piece (10, 110, 210) so as to secure it to said marking piece.

5. A method according to any one of claims 1 to 3, wherein, prior to applying the marking piece (10, 110, 210) to the support surface (22, 122, 222), the identifier element (30, 130, 230) is fastened to the support surface (22, 122, 222) with the help of adhesive means.

6. A device (100, 200, 300) for marking an article in permanent manner, the device being **characterized in that** it comprises:
· a marking piece (10, 110, 210) having a translucent wall (12, 112, 292) and suitable for being applied against a support surface (22, 122, 222) of an article for marking (20, 120, 220) so as to define a chamber (50, 150, 250) between said support surface (22, 122, 222) and said translucent wall (12, 112, 292); and
· an identifier element (30, 130, 230) suitable for being held captive in said chamber (50, 150, 250); and **in that** the marking piece (10, 110, 210) presents at least a first hole (18, 118, 218) that is suitable for communicating with the chamber (50, 150, 250) to enable adhesive to be inserted in the chamber.

7. A device (100, 200, 300) according to claim 6, wherein the marking piece (10, 110, 210) is configured so that at least a portion of the wall of the chamber (50, 150, 250) is formed by the support surface (22, 122, 222).

8. A device (100, 200, 300) according to claim 6 or claim 7, wherein the identifier element (30, 130, 230) is suitable for being held captive in the chamber (50, 150, 250) with first and second gaps (51, 52, 151, 152, 251, 252) between the identifier element (30, 130, 230) and the support surface (22, 122, 222) and between the identifier element (30, 130, 230) and the translucent wall (12, 112, 292).

9. A device (100, 200, 300) according to any one of claims 6 to 8, wherein the marking piece (10, 110, 210) also presents at least one second hole (19, 119, 219) situated at an end of the marking piece (10, 110, 210) that is opposite from the end where said first hole (18, 118, 218) is situated.

10. A device (100, 200, 300) according to any one of claims 6 to 9, wherein the marking piece (10, 110, 210) further includes support and spacer surfaces (36, 38, 136, 138, 236, 238) for holding the identifier element (30, 130, 230) facing and spaced apart from the translucent wall (12, 112, 292).

11. A device (100, 200, 300) according to any one of claims 6 to 10, wherein the marking piece (10, 110, 210) includes adhesive means (14, 114, 214) for adhering to a support surface (22, 122, 222) of the article for marking (20, 120, 220).

12. A device (100, 200, 300) according to claim 11, wherein the adhesive means (14, 114, 214) extend over the entire perimeter of the marking piece (10, 110, 210) and define a closed outline.

13. A device (100, 200, 300) according to any one of claims 6 to 12, wherein the marking piece includes at least one guide (261, 262, 263, 264, 265) adapted to be positioned inside the chamber (50, 150, 250) once the marking piece is applied against the support surface, and for guiding the adhesive while it is flowing inside said chamber (50, 150, 250).

14. A device (300) according to claim 9 and any one of claims 6 to 13, wherein the marking piece (210) has two removable or breakable tubes (272, 274) situated in line respectively with the first and second holes (218, 219) to facilitate both inserting adhesive into the inside of the chamber (250) and removing it therefrom.

15. A device (300) according to claim 10 and any one of claims 6 to 14, wherein the marking piece (210) includes at least a bottom portion (236) and a top portion (238) arranged so that the identifier element (230) can be squeezed between said portions (236, 238).

16. A device (100, 200) according to any one of claims 6 to 15, wherein the marking piece (10, 110, 210) presents a concave shape towards the article for marking (20).

17. A device (100, 200, 300) according to any one of claims 6 to 16, wherein the translucent wall (292) is made of resin.

18. A device (100, 200, 300) according to any one of claims 6 to 16, wherein the translucent wall is made of PVC.

19. A kit suitable for use in marking an article in permanent manner, the kit comprising a device (100, 200, 300) according to any one of claims 6 to 18, and a device (56, 256) for injecting adhesive and having an endpiece (58, 258) suitable for co-operating with an injection hole (18, 118, 218) of the marking piece (10, 110, 210).
